# EUROPÄISCHE PATENTANMELDUNG

(11) **EP 3 653 988 A1**
(43) Veröffentlichungstag der Anmeldung: **20.05.2020**
(21) Anmeldenummer: 19208763.3
(22) Anmeldetag: 13.11.2019
(51) Int. Cl.: G01B 11/24

(54) **SYSTEM ZUR ABBILDUNG VON OBERFLÄCHENBEREICHEN, INSBESONDERE ÄUSSERER MANTELFLÄCHEN DREIDIMENSIONALER KÖRPER**

(30) Priorität: 13.11.2018 DE 102018219344
(71) Anmelder: ORAFOL Fresnel Optics GmbH, 99510 Apolda (DE)
(72) Erfinder: Witt, Thomas, 99510 Apolda (DE)
(74) Vertreter: Pfenning, Meinig & Partner mbB

(57) **Zusammenfassung**

Bei dem System zur Abbildung von Oberflächenbereichen, insbesondere äußerer Mantelflächen dreidimensionaler Körper, ist zwischen einem optischen Detektor, der zur ortsaufgelösten Erfassung von elektromagnetischer Strahlung ausgebildet ist, und einem dreidimensionalen Körper (1) im Strahlengang eine Fresnellinse (2) mit der die von Wirkflanken der Fresnellinse (2) durch optische Brechung beeinflussten Strahlen (5) der elektromagnetischen Strahlung parallel zueinander und parallel zur optischen Achse ausgerichtet werden, angeordnet. Diese Strahlen (5) treffen auf Wirkflanken mindestens eines Fresnelaxicons (3, 4), mit denen eine Ausrichtung der Strahlen (5) erreichbar ist, so dass diese Strahlen (5) mittels optischer Brechung parallel zueinander und in einem Winkel größer 0° und kleiner 90° in Bezug zur optischen Achse der Fresnellinse (2) und des mindestens einen Fresnelaxicons auf die äußere Mantelfläche des Körpers (1) auftreffen. Am optischen Detektor ist eine Abbildung von dem jeweiligen Oberflächenbereich, insbesondere der äußeren Mantelfläche des Körpers (1) über den gesamten Umfang des Körpers (1) erfassbar.

## Beschreibung

Die Erfindung betrifft ein System zur Abbildung von Oberflächenbereichen, insbesondere äußerer Mantelflächen dreidimensionaler Körper, bevorzugt in Bezug zu einer Längsachse eines Körpers. Bevorzugt sind in Bezug zur mittleren Längsachse rotationssymmetrische Körper.

Die Inspektion von großflächigen Oberflächenbereichen, insbesondere Mantelflächen dreidimensionaler, insbesondere rotationssymmetrischer Körper wird häufig mit Hilfe mehrerer Kamera- und Beleuchtungssysteme durchgeführt. Dieses aufwändige Verfahren fordert einerseits hohe Investitionskosten durch den Einsatz umfangreicher Technik (Kameras, Objektive, Beleuchtungssysteme, leistungsstarke Rechentechnik) als auch erhöhten Aufwand bei der Einrichtung, Instandhaltung sowie bei der programmiertechnischen Aufgabe, die jeweiligen Kameraaufnahmen zu einem Bild zusammenzusetzen, um daraufhin Abbildungsfehler auszugleichen und relevante Merkmale zu bewerten. Insbesondere bei in einer Achsrichtung langgestreckten oder größeren Oberflächenbereichen von Körpern, wie dies beispielsweise Schachteln, Kartons, Flaschen, Dosen oder Rohre sind, bereitet es Probleme die gesamte oder einen großen Teil eines Oberflächenbereichs, insbesondere einer Mantelfläche abbilden zu können, da dazu mit herkömmlichen optischen Elementen ein großer Bauraum erforderlich ist. Ein großer Oberflächenbereich kann beispielsweise ein Deckel oder ein Verschlusselement eines Gefäßes sein.

Prinzipiell sind perizentrische Systeme geeignet, die lediglich aus einer Kamera-Objektiv-Einheit bestehen. Limitiert sind solche Systeme durch die freie Öffnung des abbildenden Systems, sowie deren Brennweite. Eine Bedingung für die Abbildung der Mantelfläche der äußeren Mantelfläche des Körpers auf dem Empfänger besteht grundsätzlich darin, dass der Körper innerhalb der einfachen Brennweite des optischen Systems angeordnet ist. Dies bereitet aber beim Einsatz herkömmlicher sphärischer optischer Linsen mit stetiger konkaver oder konvexer Oberfläche Probleme wegen deren Kosten und deren erforderlicher Größe. Dies trifft auch auf Objektivaufbauten, die mit mehreren solcher optischen Linsen gebildet sind, zu.

Häufig werden auch mehrere Abbildungen aus verschiedenen Positionen oder verschiedenen Winkeln erfasst. Diese Abbildungen werden dann aufwändig zu einem Bild elektronisch zusammengefügt, das die jeweilige Mantelfläche widergibt.

Es ist daher Aufgabe der Erfindung, Möglichkeiten für den Erhalt einer einzigen Abbildung der gesamten oder eines großen Teils der äußeren Mantelfläche eines dreidimensionalen Körpers anzugeben, mit denen ein einfacher kleinformatiger Aufbau und ein geringer Aufwand für eine elektronische Bearbeitung der Abbildung erreichbar sind.

Erfindungsgemäß wird diese Aufgabe mit einem System, das die Merkmale des Anspruchs 1 aufweist, gelöst. Vorteilhafte Ausgestaltungen und Weiterbildungen können mit in untergeordneten Ansprüchen bezeichneten Merkmalen realisiert werden.

Bei dem erfindungsgemäßen System ist zwischen einem optischen Detektor, der zur ortsaufgelösten Erfassung von elektromagnetischer Strahlung ausgebildet ist, und einem dreidimensionalen Körper im Strahlengang eine Fresnellinse mit der die von Wirkflanken der Fresnellinse durch optische Brechung beeinflussten Strahlen der elektromagnetischen Strahlung parallel zueinander und parallel zur optischen Achse ausgerichtet werden vorhanden. Die Strahlen müssen nicht absolut parallel zueinander ausgerichtet sein. Abweichungen von maximal 5° können beispielsweise toleriert werden. Diese gebrochenen Strahlen treffen auf Wirkflanken mindestens eines Fresnelaxicons auf. Mit den Wirkflanken des Fresnelaxicons ist durch optische Brechung eine Ausrichtung der Strahlen erreichbar, so dass diese Strahlen parallel zueinander und in einem Winkel größer 0° und kleiner 90° in Bezug zur optischen Achse der Fresnellinse und des mindestens einen Fresnelaxicons auf den jeweiligen Oberflächenbereich, insbesondere die äußere Mantelfläche des Körpers auftreffen und dadurch am optischen Detektor eine Abbildung von der äußeren Mantelfläche des Körpers über den gesamten Umfang des Körpers mit dem optischen Detektor erfassbar ist.

Bevorzugt ist ein Auftreffwinkel der Strahlen auf den jeweiligen Oberflächenbereich, insbesondere die äußere Mantelfläche des Körpers im Bereich 20° bis 70° in Bezug zur jeweiligen optischen Achse, besonders bevorzugt zwischen 30° und 45°.

Prinzipiell kann man konventionelle Fresnellinsen einsetzen. Da aber der Spotdurchmesser im Brennpunkt konventioneller Fresnellinsen möglichst klein ist, sollte mindestens eine Fresnellinse eingesetzt werden, die einen größeren Spotdurchmesser im Bereich weniger mm realisiert, um Abbildungsfehler des zum Einsatz kommenden optischen Aufbaus zu kompensieren. So können beispielsweise Abbildungsfehler (Verzeichnung) im Randbereich einer Abbildung vermieden werden. Lichtstrahlen, die mit einer konventionellen Fresnellinse durch optische Brechung beeinflusst werden, verlaufen nach dem Durchtritt durch eine konventionelle Fresnellinse nicht hinreichend genau parallel zur optischen Achse, was zu einer Abbildung mit geringerer Qualität und Kontrast führen kann.

Alle Störflächen der Fresnellinse und des/der Fresnelaxicons können den gleichen Winkel in Bezug zu ihren optischen Achsen aufweisen. Der Störflankenwinkel kann beispielsweise 3° betragen.

Alle Wirkflanken des/der Fresnelaxicons sollten jeweils den gleichen Winkel in Bezug zur optischen Achse aufweisen. Der Wirkflankenwinkel kann im Bereich 20° bis 40°, bevorzugt zwischen 25° und 30° gewählt sein. Dabei können Wirkflankenwinkel an den verschiedenen Fresnelaxicons unterschiedlich groß sein. Am jeweiligen einen Fresnelaxicon sind sie aber gleich groß.

Die Fresnellinse und das/die Fresnelaxicon(s) sollten so ausgebildet und angeordnet sein, dass ihre optischen Achsen koinzident sind bzw. miteinander fluchten.

Der Störflankenwinkel des in Bestrahlungsrichtung des jeweiligen Körpers zuerst angeordneten ersten Fresnelaxicons sollte möglichst steil sein, insbesondere ein Winkel von ca. 3° eingehalten sein. Der Störflankenwinkel eines in Bestrahlungsrichtung des Körpers hinter dem ersten Fresnelaxicon angeordneten Fresnelaxicons sollte nach Möglichkeit dem Ablenkwinkel der Strahlen, die mit dem ersten Fresnelaxicon gebrochen worden sind, entsprechen. Diese Strahlen sollten nach Möglichkeit an einem in Bestrahlungsrichtung des jeweiligen Körpers hinter dem ersten Fresnelaxicon angeordneten Fresnelaxicon parallel zu dessen Störflanken verlaufen, damit Streulicht vermieden werden kann. Dies dient für eine Kontraststeigerung der Abbildung der Oberfläche der äußeren Mantelfläche des Körpers.

Zur Beeinflussung der Größe oder der Position der jeweiligen Abbildung kann der Abstand der Fresnellinse zum jeweiligen Körper verändert werden. Dazu ist aber auch eine Veränderung des Abstands eines Fresnelaxicons zum Körper oder eine Veränderung des Abstandes zwischen Fresnelaxicons geeignet.

Zusätzlich kann ein Beleuchtungselement Bestandteil des Systems sein, das elektromagnetische Strahlung möglichst homogen in Richtung des jeweiligen Körpers und durch die Fresnellinse und das/die Fresnelaxicon(s) emittiert.

Als optischen Detektor kann man eine geeignete Kamera oder auch ein CCD- oder CMOS-Array einsetzen.

Ein optischer Detektor kann auch mit einer elektronischen Auswerteeinheit verbunden sein, mit der beispielsweise eine Bearbeitung und/oder Auswertung der jeweiligen erfassten Abbildung erreicht werden kann. So können beispielsweise Körper individuell identifiziert werden, was z.B. durch Erkennung einer an dem jeweiligen Oberflächenbereich, insbesondere an der Mantelfläche vorhandenen Beschriftung oder sonstigen Codierung möglich ist. Zudem kann die Lage, Position und der Zustand von Etiketten und/ oder Banderolen sowie sonstiger Aufdrucke identifiziert werden. Es ist auch eine Überprüfung von Verschlüssen, etwa Schraubverschlüssen jeglicher Art, oder eine Überprüfung der korrekten Verschweißung von Konservendosen möglich.

Zur Realisierung der Inspektion der Körper kann man eine herkömmliche, bevorzugt elektronische Kamera sowie ein handelsübliches Objektiv, bei einem kompakt aufgebauten System bevorzugt ein Weitwinkelobjektiv sowie eine Kombination aus großaperturigen mikrostrukturierten optischen Elementen, die aus einem für elektromagnetische Strahlung transparenten Polymer mit einem optischen Brechungsindex > 1,2 hergestellt sind, einsetzen. Dies ermöglicht nicht nur eine hinreichend gute optische Auflösung der Mantelfläche des Körpers. Es kann auch eine recht homogene Beleuchtung des Prüflings über eine Tiefe von ca. 200 mm erreicht werden. Der Beobachtungsstrahlengang entspricht dabei nahezu dem Beleuchtungsstrahlengang, was eine verhältnismäßig kompakte und technisch einfach umzusetzende Bauweise ermöglicht.

Eine Eigenart hierbei liegt darin, dass Fresnelaxicons zum Einsatz kommen können, die üblicherweise dazu genutzt werden, einen Linienfokus auf der optischen Achse zu erzeugen. Bei der Erfindung gewährleisten sie, in Kombination mit einer Fresnellinse, eine homogene Ausleuchtung der äußeren Mantelfläche eines Körpers, die abgebildet werden soll, durch die parallel zueinander auf die Mantelfläche auftreffenden einzelnen Lichtstrahlen. Weiterhin sorgt die Wirkung des mindestens einen Fresnelaxicons, im Gegensatz zu konventionellen optischen Linsen, dafür dass das Strahlenbündel über die vollständige Messtiefe unter identischem Winkel auf die jeweilige äußere Mantelfläche des Körpers auftrifft. Dies führt zu einer geringeren Verzerrung der finalen Abbildung und somit zur einfacheren Prozessierung (elektronische Bearbeitung) der entsprechenden mit dem optischen Detektor erfassten Abbildung.

Mit mehreren im Strahlengang der elektromagnetischen Strahlung hintereinander angeordneten Fresnelaxicons kann zum einen Totalreflexion TIR (totale interne Reflexion) vermieden und zum anderen die optische Abbildungsqualität gesteigert werden.

Durch die vollständige Abbildung oder eines großen Teils der Fläche der jeweiligen Mantelfläche des Körpers über seinen vollständigen Umfang oder den größten Teil seines Umfangs, kann durch eine Transformation von einem kartesischen Koordinatensystem in Polarkoordinaten eine einfache "Auffaltung" der Mantelfläche erfolgen, sofern die mittlere Längsachse des Körpers und die optischen Achsen der optischen Elemente des erfindungsgemäßen Systems koinzident sind. Dabei kann eine Toleranz von ± 5 mm bei einer Abweichung der mittleren Längsachse von der optischen Achse der Fresnelelemente für eine hinreichend gute Qualität der erhaltenen Abbildung akzeptiert werden. Anschließend kann auf der prozessierten Abbildung verhältnismäßig einfach nach relevanten Merkmalen gesucht werden. Relevante Merkmale können Kennzeichnungselemente aber auch Defekte sein, die beispielsweise mittels einer elektronischen Bild- oder Mustererkennung erkannt und/oder ausgewertet werden können.

Bei dem Einsatz von Fresnellinsen ist es bekanntermaßen vorteilhaft, dass diese durch die reduzierte Mittendicke, eine große freie Öffnung ermöglichen. Konventionelle Optiken aus mineralischen Gläsern mit stetig geschliffenen Grenzflächen wären mit vergleichbaren freien Öffnungen (bspw. 350 mm und mehr) nur bedingt herstellbar bzw. extrem teuer, insbesondere wären sie mehrere Kilogramm schwer. Dies prädestiniert in jedem Fall Fresnellinsen für dieses Einsatzfeld.

Zusätzlich bestehen viele Freiheitsgrade bei der Wahl von Wirk- und Störflankenwinkeln beim Design der Fresnelelemente, da die entsprechende Fertigungstechnologie es zulässt. Man hat die Möglichkeit bspw. mehrere Wendepunkte im Optikdesign zu erstellen. Dabei kann die Linsenkontur, insbesondere deren mathematische Beschreibung mittels sog. Asphärengleichung, die u.a. den Basisradius, eine konische Konstante sowie Asphärenkoeffizienten einer asphärischen Linsenkontur) berücksichtigt, bestimmt werden. Der Wendepunkt beschreibt den Wechsel einer konvex zur konkav verlaufenden Kontur, oder umgekehrt.

Es können, im Gegensatz zu stetigen Linsen, auch positive und negative Fresnellinsen in einem erfindungsgemäßen System realisiert werden. Es können auch Multifokallinsen als Fresnellinse eingesetzt werden, um unterschiedliche Oberflächenbereiche mehr oder weniger genau abbilden zu können. Je nach Anwendung bestehen viele Freiheitsgrade, um mehrere Nutzen (bspw. Abbildungs- oder Beleuchtungsstrahlengänge) mit ein und demselben Optikdesign umzusetzen. Es wäre auch denkbar, im peripheren Bereich, der nicht für die Abbildung des Objektes genutzt wird, weitere Strukturen in die Optik einzubringen, die einen anderen Zweck haben, wie z.B. eine Zusatzbeleuchtung, Implementierung von Lichtschranken oder Ähnliches.

Nachfolgend soll die Erfindung beispielhaft näher erläutert werden.

Dabei zeigen:
- Figur 1: in schematischer Form ein Beispiel eines erfindungsgemäßen Systems mit dem Strahlengang elektromagnetischer Strahlung, die für die Erfassung einer Abbildung der äußeren Mantelfläche eines dreidimensionalen Körpers eingesetzt worden ist und
- Figur 2: die Beeinflussung von Strahlen der elektromagnetischen Strahlung durch optische Brechung mittels einer Fresnellinse und zwei Fresnelaxicons.

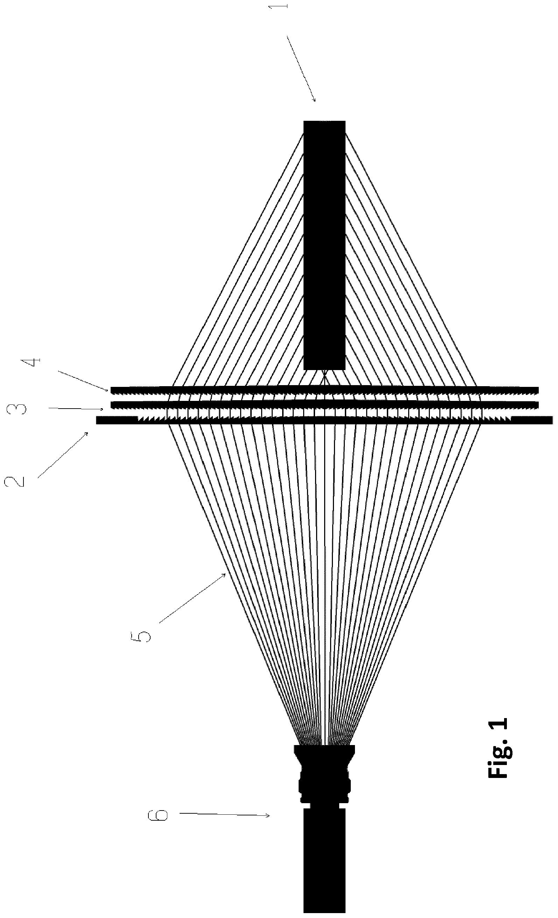

Figur 1 zeigt schematisch, wie elektromagnetische Strahlung ausgehend von einer Beleuchtungsquelle oder einem Objektiv in Richtung eines Körpers 1 von dessen äußerer Mantelfläche eine Abbildung erfasst werden soll, emittiert wird.

Die einzelnen Strahlen 5 der elektromagnetischen Strahlung sind divergent zueinander und treffen so auf eine planare Fläche und nach einer ersten optischen Brechung auf die Wirkflanken der Fresnellinse 2 auf, dass die einzelnen Strahlen 5 durch optische Brechung parallel zueinander und parallel zur optischen Achse der Fresnellinse 2 und den zwei Fresnelaxicons 3 und 4 ausgerichtet sind. Dazu weisen die Wirkflächen der Fresnellinse 2 entsprechende unterschiedliche Winkel in Bezug zur optischen Achse auf. In Figur 1 ist dieser optische Aufbau mit diesen Fresnelelementen nur schematisch angedeutet.

Diese parallel zueinander und parallel zur optischen Achse der Fresnellinse 2 ausgerichteten Strahlen 5 treffen auf Wirkflächen mindestens eines Fresnelaxicons 3 oder 4 auf. Dabei weisen alle Wirkflächen eines Fresnelaxicons 3 und 4 den gleichen Winkel in Bezug zur optischen Achse auf. Dadurch treffen die an dem/den jeweiligen Fresnelaxicon(s) 3 und/oder 4 jeweils zweifach optisch gebrochenen Strahlen 5 parallel zueinander auf die äußere Mantelfläche des Körpers 1 mit einem Winkel von 35° in Bezug zur optischen Achse des/der Fresnelaxicon(s) 3 bzw. 4 auf. Dadurch kann eine Abbildung der gesamten beleuchteten Oberfläche der Mantelfläche des Körpers 1 mit einem einzigen optischen Detektor 6 über den gesamten Umfang erfasst werden, der als elektronische Kamera ausgebildet ist.

Der optische Detektor 6 ist dabei im Bereich der Abbildungsebene der emittierten elektromagnetischen Strahlung so angeordnet, dass die jeweils gewünschte Fläche der äußeren Mantelfläche des Körpers 1 abgebildet werden kann.

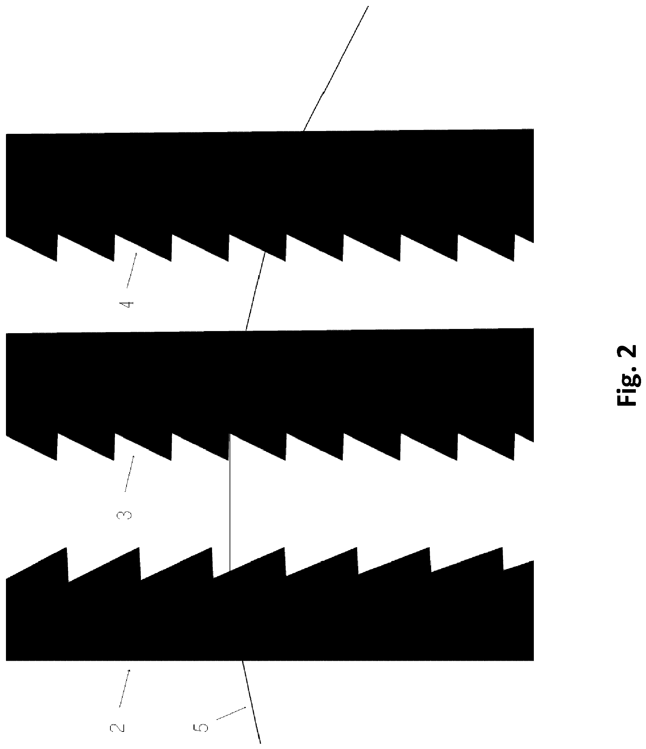

In Figur 2 ist ein Ausschnitt des optischen Aufbaus mit einer Fresnellinse 2 und zwei Fresnelaxicons 3 und 4 gezeigt. Die optischen Fresnelelemente 2, 3 und 4 bestehen aus für die elektromagnetische Strahlung transparentem polymerem Werkstoff und weisen an jeweils mindestens einer Oberfläche durch Mikrostrukturierung erhaltene Stör- und Wirkflanken auf. Das Polymer hat einen optischen Brechungsindex von 1,49 bei einer Wellenlänge von 589 nm.

Im Beobachtungsstrahlengang trifft die elektromagnetische Strahlung nach dem Austritt aus der Kamera/Objektiv-Einheit als optischer Detektor 6 auf eine konventionelle Fresnellinse 1 auf. Diese sorgt für eine Abbildung nach unendlich, da die einzelnen Strahlen 5 durch zweifache optische Brechung an der Fresnellinse 2 parallel zur optischen Achse ausgerichtet werden. Anschließend führt der Strahlenverlauf über die bei diesem Beispiel zwei Fresnelaxicons 3 und 4 auf die abzubildende äußere Mantelfläche des Körpers 1 auf. Je nach gefordertem Ablenkwinkel kann durch den Einsatz mehrerer Fresnelaxicons 3 und 4 die Brechkraft auf mehrere Grenzflächen, an denen eine optische Brechung der Strahlen 5 erfolgt, verteilt werden, um zum einen Totalreflexion TIR (totale interne Reflexion) zu vermeiden und zum anderen die optische Abbildungsqualität zu steigern.

Die Fresnellinse 2 weist standardgemäß Wirkflanken und auch Störflanken auf, wobei die Wirkflankenwinkel in diskreten Stufen einer Asphärenkontur folgen und die Störflankenwinkel konstant bspw. 3 ° betragen können. Anders als bei der Fresnellinse 2 bleiben die Wirkflanken- als auch Störflankenwinkel bei einem Fresnelaxicon 3 und 4 über die gesamte freie Öffnung grundsätzlich konstant. Dabei kann der Wirkflankenwinkel beispielsweise 27° und der Störflankenwinkel kann 3° betragen. Der Winkel in dem die Störflanken des Fresnelaxicons 4, das in Bestrahlungsrichtung des Körpers 1 hinter dem Fresnelaxicon 3 angeordnet ist, haben einen Winkel, mit dem die Störflanken des Fresnelaxicons 4 parallel zu den Strahlen ausgerichtet sind, die am Fresnelaxicon 3 bereits zweimal gebrochen worden sind, bevor sie auf das hinter diesem Fresnelaxicon 3 angeordneten Fresnelaxicon 4 auftreffen.

Die Mittendicken der Fresnelelemente 2, 3 und 4 liegen typischerweise bei 1,8 mm.

## Patentansprüche

1. System zur Abbildung von Oberflächenbereichen, insbesondere äußerer Mantelflächen dreidimensionaler Körper, bei dem zwischen einem optischen Detektor, der zur ortsaufgelösten Erfassung von elektromagnetischer Strahlung ausgebildet ist, und einem dreidimensionalen Körper (1) im Strahlengang eine Fresnellinse (2) mit der die von Wirkflanken der Fresnellinse (2) durch optische Brechung beeinflussten Strahlen (5) der elektromagnetischen Strahlung parallel zueinander und parallel zur optischen Achse ausgerichtet werden und diese Strahlen (5) auf Wirkflanken mindestens eines Fresnelaxcons (3, 4) auftreffen, mit denen eine Ausrichtung der Strahlen (5) erreichbar ist, so dass diese Strahlen (5) mittels optischer Brechung parallel zueinander und in einem Winkel größer 0° und kleiner 90° in Bezug zur optischen Achse der Fresnellinse (2) und des mindestens einen Fresnelaxicons auf die äußere Mantelfläche des Körpers (1) auftreffen und dadurch am optischen Detektor eine Abbildung von dem jeweiligen Oberflächenbereich, insbesondere der äußeren Mantelfläche des Körpers (1) über den gesamten Umfang des Körpers (1) mit dem optischen Detektor erfassbar ist.

2. System nach Anspruch 1, **dadurch gekennzeichnet, dass** alle Störflächen der Fresnellinse (2) und des/der Fresnelaxicons (3, 4) den gleichen Winkel in Bezug zu ihren optischen Achsen aufweisen.

3. System nach einem der vorhergehenden Ansprüche, **dadurch gekennzeichnet, dass** alle Wirkflanken des/der Fresnelaxicons (3, 4) jeweils den gleichen Winkel in Bezug zur optischen Achse aufweisen.

4. System nach einem der vorhergehenden Ansprüche, **dadurch gekennzeichnet, dass** die Wirkflanken von mehreren Fresnelaxicons (3, 4) jeweils unterschiedliche Winkel in Bezug zur optischen Achse aufweisen.

5. System nach einem der vorhergehenden Ansprüche, **dadurch gekennzeichnet, dass** der Abstand der Fresnellinse (2) zum jeweiligen Körper (1) veränderbar ist.

6. System nach einem der vorhergehenden Ansprüche, **dadurch gekennzeichnet, dass** der Abstand des mindestens einen Fresnelaxicons (3, 4) zum Körper (1) und/oder
der Abstand mehrerer Fresnelaxicons (3, 4) zueinander veränderbar ist.

7. System nach einem der vorhergehenden Ansprüche, **dadurch gekennzeichnet, dass** der optische Detektor mit einer elektronischen Auswerteeinheit, die zur Bearbeitung und/oder Auswertung der jeweiligen erfassten Abbildung ausgebildet ist.

8. System nach einem der vorhergehenden Ansprüche, **dadurch gekennzeichnet, dass** der Störflankenwinkel eines in Bestrahlungsrichtung des Körpers (1) hinter einem Fresnelaxicon (3) angeordneten Fresnelaxicons (4) dem Ablenkwinkel der Strahlen (5), die mit dem in Bestrahlungsrichtung des Körpers (1) davor angeordneten Fresnelaxicon (3) gebrochen worden sind, entspricht.
